Europäisches Patentamt

European Patent Office

Office européen des brevets

(19)

(11) EP 0 908 498 A2

(12) **EUROPÄISCHE PATENTANMELDUNG**

(43) Veröffentlichungstag:
14.04.1999 Patentblatt 1999/15

(51) Int. Cl.⁶: **C09D 183/04**, C08J 3/03,
C04B 41/49

(21) Anmeldenummer: 98114360.5

(22) Anmeldetag: 30.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 09.10.1997 DE 19744612

(71) Anmelder: Wacker-Chemie GmbH
81737 München (DE)

(72) Erfinder:
• Hager, Rudolf, Dr.
84503 Altötting (DE)

• Mayer, Hans, Dr.
84489 Burghausen (DE)
• Kreuzpointer, Marianne
84543 Winhöring (DE)

(74) Vertreter:
Fritz, Helmut, Dr. et al
Wacker-Chemie GmbH,
Zentralabteilung Patente,
Marken und Lizenzen,
Hanns-Seidel-Platz 4
81737 München (DE)

(54) **Emulsionen von Organosiliciumverbindungen für die Hydrophobierung von Baustoffen**

(57) Die wässrige Emulsion enthält die Komponenten

(A), welche ausgewählt werden aus
(A1) $C_1$-$C_{20}$-Kohlenwasserstoff-$C_1$-$C_6$-alkoxysilanen und
(A2) $C_1$-$C_6$-Alkoxygruppen enthaltenden verzweigten Organopolysiloxanen,
(B), welche ausgewählt werden aus
(B1) Aminoalkygruppen enthaltenden $C_1$-$C_6$-Alkoxysilanen und
(B2) Aminoalkygruppen enthaltenden verzweigten Organosiloxanen, und
(C) Emulgator.

Die wässrige Emulsion eignet sich zur Hydrophobierung von porösen mineralischen Baustoffen und Baubeschichtungen sowie von Holz.

EP 0 908 498 A2

**Beschreibung**

Die Erfindung betrifft wässrige Emulsionen von Alkoxygruppen enthaltenden Organosiliciumverbindungen und Aminoalkygruppen enthaltenden Organosiliciumverbindungen und ein Verfahren zur Hydrophobierung von porösen mineralischen Baustoffen und Baubeschichtungen sowie von Holz.

Wässrige Emulsionen siliciumorganischer Verbindungen werden im Bautenschutz vor allem wegen ihrer hervorragenden Imprägnierwirkung gegen Wasser und Schmutz, ihrer Umweltverträglichkeit und ihrer physiologischer Unbedenklichkeit eingesetzt.

In der US-A-4,757,106 ist die Imprägnierung von neutralen mineralischen Baustoffen mit einer wässrigen Emulsion aus Ammoniumgruppen aufweisendem Polyorganosiloxan und Ethoxygruppen aufweisendem Polyorganosiloxan beschrieben. Die hydrophobierende Wirkung ist auf alkalischen Baustoffen geringer, da die Ammoniumgruppen neutralisiert werden und die Emulsion bricht. Die Polyorganosiloxane können dann kaum in den Baustoff eindringen.

Emulsionen, welche harzartige, Alkoxygruppen aufweisende Polyorganosiloxane als Wirkstoff enthalten, dringen gut in poröse Baustoffe ein und verleihen diesen gute Oberflächenhydrophobie. Dichte Baustoffe werden jedoch nur oberflächlich und zeitlich begrenzt geschützt.

Emulsionen von Alkylalkoxysilanen dringen zwar gut in Baustoffe ein, sind aber nicht lagerstabil. In der US-A-4,877,654 sind gepufferte Emulsionen von Alkylalkoxysilanen beschrieben, die zwar lagerstabil sind, sich aber insbesondere in neutralen Baustoffen zu langsam abscheiden und deshalb insbesondere in der oberflächennahen Zone schlecht hydrophobieren.

Emulsionen, welche harzartige, Alkoxygruppen aufweisende Polyorganosiloxane und niedermolekulare Alkylalkoxysiloxane bzw. Alkylalkoxysilane als Wirkstoff enthalten, sind aus der US-A-5,039,724 bekannt. Diese Emulsionen sind ein Kompromiß zwischen Lagerbeständigkeit und hydrophobierender Wirkung an der Oberfläche.

In der US-A-5,196,054 ist eine Emulsion beschrieben, die neben Alkyl- und Alkoxygruppen enthaltenden Silanen und Siloxanen auch ein Gemisch oder ein Umsetzungsprodukt von Aminoalkylgruppen enthaltendem Silan und $\alpha,\omega$-Hydroxypolydialkylsiloxan enthält. Diese Komponente bewirkt zwar eine raschere Ausbildung der Hydrophobie auf der Baustoffoberfläche, behindert aber die Penetration der anderen Wirkstoffkomponenten in die Tiefe der Baustoffporen.

Der Erfindung liegt die Aufgabe zugrunde, lagerstabile wässrige Emulsionen von Organosiliciumverbindungen für die Hydrophobierung von porösen mineralischen Baustoffen und Baubeschichtungen, sowie ein Verfahren zum Hydrophobieren von porösen mineralischen Baustoffen und Baubeschichtungen bereitzustellen, das bei neutralen und basischen Baustoffen und Baubeschichtungen besonders wirksam ist und die Nachteile der vorstehend beschriebenen Emulsionen nicht aufweist.

Gegenstand der Erfindung ist eine wässrige Emulsion, welche die Komponenten

(A), welche ausgewählt werden aus
(A1) $C_1$-$C_{20}$-Kohlenwasserstoff-$C_1$-$C_6$-alkoxysilanen und
(A2) $C_1$-$C_6$-Alkoxygruppen enthaltenden, verzweigten Organopolysiloxanen,
(B), welche ausgewählt werden aus
(B1) Aminoalkygruppen enthaltenden $C_1$-$C_6$-Alkoxysilanen und
(B2) Aminoalkygruppen enthaltenden, verzweigten Organosiloxanen, und
(C) Emulgator

enthält.

Vorzugsweise besitzen die $C_1$-$C_{20}$-Kohlenwasserstoff-$C_1$-$C_6$-alkoxysilane (A1) 1 oder 2 gleiche oder verschiedene, gegebenenfalls halogensubstituierte, über SiC-gebundene einwertige $C_1$-$C_{20}$-Kohlenwasserstoffreste, und die übrigen Reste sind gleiche oder verschiedene $C_1$-$C_6$-Alkoxyreste.

Beispiele für die $C_1$-$C_{20}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste; Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der $\beta$-Phenylethylrest. Besonders bevorzugt sind die nicht substituierten $C_1$-$C_{12}$-Alkylreste und der Phenylrest.

Beispiele für halogensubstituierte $C_1$-$C_{20}$-Alkylreste sind mit Fluor-, Chlor, Brom- und Jodatomen substituierte Alkylreste, wie der 3,3,3-Trifluor-n-propylrest, der 2,2,2',2',2'-Hexafluorisopropylrest und der Heptafluorisopropylrest.

Besonders bevorzugt sind die nicht substituierten $C_1$-$C_{12}$-Alkylreste und der Phenylrest.

Beispiele für $C_1$-$C_6$-Alkoxyreste sind der Methoxy-, Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, jedoch ist dies nicht bevorzugt.

Die Emulsion kann ein $C_1$-$C_6$-Alkoxygruppen enthaltendes, verzweigtes Organopolysiloxan (A2) oder ein Gemisch mehrerer Organopolysiloxane (A2) enthalten. Die Organopolysiloxane (A2) können zusätzlich Hydroxylgruppen enthalten, die eine Bindung an die Baustoffe erleichtern.

Vorzugsweise sind die Organopolysiloxane (A2) aus Einheiten der allgemeinen Formel (I)

$$R_xSi(OR^1)_y(OH)_zO_{\frac{4-x-y-z}{2}} \tag{I},$$

aufgebaut, in der

R    gleiche oder verschiedene einwertige, gegebenenfalls halogensubstituierte, über SiC-gebundene $C_1$-$C_{20}$-Kohlenwasserstoffreste,

$R^1$    gleiche oder verschiedene einwertige $C_1$-$C_6$-Alkylreste,

x    die Werte 0, 1, 2 oder 3, durchschnittlich 0,8 bis 1,8,

y    die Werte 0, 1, 2, oder 3, durchschnittlich 0,01 bis 2,0 und

z    die Werte 0, 1, 2 oder 3, durchschnittlich 0,0 bis 0,5 bedeuten, mit der Maßgabe, daß die Summe von x, y und z durchschnittlich höchstens 3,5 beträgt, wobei

die Organopolysiloxane (A2) mindestens eine Einheit der allgemeinen Formel (I) aufweisen, in der die Summe von x, y und z die Werte 0 oder 1 beträgt.

Vorzugsweise besitzt das Organopolysiloxan (A2) eine Viskosität von 5 $mm^2$/s bis 50000 $mm^2$/s, insbesondere 10 $mm^2$/s bis 5000 $mm^2$/s bei 25°C.

Beispiele für die $C_1$-$C_{20}$-Kohlenwasserstoffreste sind die vorstehend bei den $C_1$-$C_{20}$-Kohlenwasserstoff-$C_1$-$C_6$-alkoxysilanen (A1) aufgeführten Beispiele für $C_1$-$C_{20}$-Kohlenwasserstoffreste.

Obwohl in der vorstehend aufgeführten Formel nicht aufgeführt, kann ein Teil der Reste R durch direkt an Siliciumatome gebundene Wasserstoffatome ersetzt sein. Dies ist jedoch nicht bevorzugt.

Beispiele für die Reste $OR^1$ sind die vorstehend für $C_1$-$C_{20}$-Kohlenwasserstoff-$C_1$-$C_6$-alkoxysilane (A1) genannten $C_1$-$C_6$-Alkoxyreste.

Vorzugsweise hat x einen durchschnittlichen Wert von 0,9 bis 1,1. Vorzugsweise hat y einen durchschnittlichen Wert von 0,4 bis 1,2. Vorzugsweise hat z einen durchschnittlichen Wert von 0,0 bis 0,2.

Da die Organopolysiloxane (A2) verzweigt sind, weisen diese mindestens eine Einheit der allgemeinen Formel (I) auf, in der die Summe von x, y und z die Werte 0 oder 1 beträgt. Vorzugsweise weisen die Organopolysiloxane (A2) mindestens 10 mol-%, insbesondere mindestens 30 mol-% Einheiten der allgemeinen Formel (I) auf, in der die Summe von x, y und z die Werte 0 oder 1 beträgt.

Beispiele für Organosiloxane (A2) sind solche, die durch Umsetzung von Methyltrichlorsilan und gegebenenfalls einem $C_1$-$C_8$-Alkyltrichlorsilan oder Phenyltrichlorsilan mit Ethanol in Wasser erhältlich sind, wie die Organopolysiloxane der Summenformeln

$$CH_3Si(OC_2H_5)_{0,8}O_{1,1} \text{ oder}$$

$$C_6H_5Si(OC_2H_5)_{0,72}O_{1,14} \text{ oder}$$

$$(CH_3)_{0,7}(^{iso}Oct)_{0,3}Si(OCH_3)_{1,3}O_{0,85}.$$

Vorzugsweise weisen die Aminoalkygruppen enthaltenden $C_1$-$C_6$-Alkoxysilane (B1) die allgemeine Formel (II)

$$R^2_aR^3_bSi(OR^4)_{4-a-b} \tag{II},$$

auf, in der

$R^2$    gleiche oder verschiedene einwertige, gegebenenfalls halogensubstituierte, SiC-gebundene $C_1$-$C_{20}$-Kohlenwasserstoffreste bedeutet,

$R^3$    gleiche oder verschiedene einwertige, gegebenenfalls halogensubstituierte, SiC-gebundene Aminoalkylreste mit 1 bis 30 Kohlenstoffatomen bedeutet,

$R^4$    gleich oder verschieden sein kann und Wasserstoffatom oder $C_1$-$C_6$-Alkylreste bedeutet,

**a**    0, 1, oder 2 und

**b**    1, 2 oder 3 ist,

mit der Maßgabe, daß die Summe aus **a** und **b** kleiner oder gleich 3 ist.

Beispiele und bevorzugte Beispiele für den Rest $R^2$ sind vorstehend bei Rest **R** aufgeführt. Insbesondere ist der Methylrest bevorzugt.

Bevorzugt handelt es sich bei Rest $R^3$ um einen Rest der allgemeinen Formel (III)

$$R^5_2NR^6- \tag{III},$$

worin

$R^5$    gleich oder verschieden sein kann und Wasserstoff oder einwertigen, gegebenenfalls substituierten $C_1$-$C_{10}$-Kohlenwasserstoffrest oder $C_1$-$C_{10}$-Aminokohlenwasserstoffrest und

$R^6$    einen zweiwertigen $C_1$-$C_{15}$-Kohlenwasserstoffrest bedeuten.

Beispiele für Rest $R^5$ sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (III) mindestens ein Wasserstoffatom gebunden.

Bevorzugt handelt es sich bei Rest $R^6$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^6$ sind der Methylen-, Ethylen-, Propylen-, Butylen-, Cyclohexylen-, Octadecylen-, Phenylen- und Butenylenrest.

Bevorzugte Beispiele für Reste $R^3$ sind

$H_2N(CH_2)_3-$,
$H_2N(CH_2)_2NH(CH_2)_2-$,
$H_2N(CH_2)_2NH(CH_2)_3-$,
$H_2N(CH_2)_2-$,
$H_3CNH(CH_2)_3-$,
$C_2H_5NH(CH_2)_3-$,
$H_3CNH(CH_2)_2-$,
$C_2H_5NH(CH_2)_2-$,
$H_2N(CH_2)_4-$,
$H_2N(CH_2)_5-$,
$H(NHCH_2CH_2)_3-$,
$C_4H_9NH(CH_2)_2NH(CH_2)_2-$,
cyclo-$C_6H_{11}NH(CH_2)_3-$,
cyclo-$C_6H_{11}NH(CH_2)_2-$,
$(CH_3)_2N(CH_2)_3-$ ,
$(CH_3)_2N(CH_2)_2-$ ,
$(C_2H_5)_2N(CH_2)_3-$ und
$(C_2H_5)_2N(CH_2)_2-$ .

Die Beispiele für Alkylreste $R^1$ gelten im vollen Umfang auch für den Rest $R^6$.

Beispiele und bevorzugte Beispiele für den Rest $R^4$ sind vorstehend bei Rest $R^1$ aufgeführt. Insbesondere sind der Methyl- und der Ethylrest bevorzugt.

Vorzugsweise sind die Aminoalkygruppen enthaltenden verzweigten Organosiloxane (B2) aus Einheiten der allgemeinen Formel (IV)

$$R^7_cR^8_d(OR^9)_eSiO_{\frac{4-c-d-e}{2}} \tag{IV},$$

aufgebaut, in der

$R^7$    die Bedeutungen von **R**,
$R^8$    die Bedeutungen von $R^3$ und

**$R^9$**  die Bedeutungen von **$R^1$** aufweisen und

**c**  die Werte 0 oder 1,

**d**  die Werte 0, 1, 2, oder 3 und

**e**  die Werte 0, 1, 2 oder 3 bedeuten,

mit der Maßgabe, daß die Summe von **c**, **d** und **e** höchstens 3 beträgt und die Organopolysiloxane (B2) mindestens eine Einheit der allgemeinen Formel (IV) aufweisen, in der die Summe von **c**, **d** und **e** die Werte 0 oder 1 beträgt.

Bevorzugte Bedeutungen von **$R^7$** sind vorstehend für **R** aufgeführt, insbesondere ist **$R^7$** ein Methylrest.

Bevorzugte Bedeutungen von **$R^8$** sind vorstehend für **$R^3$** aufgeführt, insbesondere ist **$R^8$** eine Aminopropyl- oder (Aminoethyl)aminopropylgruppe.

Bevorzugte Bedeutungen von **$R^9$** sind vorstehend für **$R^1$** aufgeführt, insbesondere ist **$R^9$** ein Methyl- oder Ethylrest.

Der bevorzugte durchschnittliche Wert für **c** ist 0 bis 1, insbesondere 0,1 bis 0,9.

Vorzugsweise bedeutet **d** die Werte 0 oder 1. Der bevorzugte durchschnittliche Wert für **d** ist 0,1 bis 1, insbesondere 0,2 bis 0,8.

Vorzugsweise bedeutet **e** die Werte 0,1 oder 2. Der bevorzugte durchschnittliche Wert für **e** ist 0,2 bis 2, insbesondere 0,4 bis 1,6.

Vorzugsweise haben die Aminoalkygruppen enthaltenden, verzweigten Organosiloxane (B2) eine Viskosität von 5 bis 5000, insbesondere von 10 bis 3000 $mm^2$/s bei 25°C.

Vorzugsweise weisen die Organosiloxane (B2) mindestens 10 mol-%, insbesondere mindestens 30 mol-% Einheiten der allgemeinen Formel (I) auf, in der die Summe von **a**, **b** und **c** die Werte 0 oder 1 beträgt.

Organosiloxane (B2) können in bekannter Weise, beispielsweise durch Äquilibrieren bzw. Kondensieren von aminofunktionellen Silanen mit Organopolysiloxanen, die Alkoxygruppen und/oder Hydroxylgruppen enthalten und die frei von basischem Stickstoff sind, hergestellt werden.

Die wässrige Emulsion enthält an sich bekannte Emulgatoren (C).

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein

3. Alkali- und Ammoniumsalze von Carbonsäuren mit 8 bis 20 C-Atomen im Alkyl-, Aryl-, Alkaryl- oder Aralkylrest

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000

6. Alkylpolyglycolether, vorzugsweise solche mit 8 bis 40 EO-Einheiten und Alkylresten von 8 bis 20 C-Atomen

7. Alkylarylpolyglycolether, vorzugsweise solche mit 8 bis 40 EO-Einheiten und 8 bis 20 C-Atomen in den Alkyl- und Arylresten

8. Ethylenoxid/Propylenoxid(EO/PO)-Blockcopolymere, vorzugsweise solche mit 8 bis 40 EO- bzw. PO-Einheiten

9. Additionsprodukte von Alkylaminen mit Alkylresten von 8 bis 22 C-Atomen mit Ethylenoxid oder Propylenoxid

10. Fettsäuren mit 6 bis 24 C-Atomen

11. Alkylpolyglykoside der allgemeinen Formel $R^*$-O-$Z_o$, worin $R^*$ einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen

13. Polare Gruppen enthaltende, lineare Organo(poly)siloxane, insbesondere solche mit Alkoxygruppen mit bis zu 24 C-Atomen und/oder bis zu 40 EO- und/oder PO-Gruppen

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze

18. Betaine, wie N-(3-Acylamidopropyl)-N,N-dimethylammoniumsalze mit einem $C_8$-$C_{18}$-Acylrest und Alkyl-imidazolium-Betaine

Bevorzugt als Emulgatoren (C) sind nichtionische Emulgatoren, insbesondere die vorstehend unter 6. aufgeführten Alkylpolyglycolether, die unter 7. aufgeführten Alkylarylpolyglycolether, die unter 9. aufgeführten Additionsprodukte von Alkylaminen mit Ethylenoxid oder Propylenoxid, die unter 11. aufgeführten Alkylpolyglykoside und der vorstehend unter 5. aufgeführte Polyvinylalkohol, wobei besonders bevorzugte Polyvinylalkohole noch 5 bis 20 %, insbesondere 10 bis 15 % Vinylacetateinheiten enthalten und vorzugsweise einen Polymerisationsgrad von 500 bis 3000, insbesondere von 1200 bis 2000 aufweisen.

Die Gesamtmenge der Komponenten (A) und (B) in den wässrigen Emulsionen beträgt vorzugsweise 1 bis 80 Gew.-%, insbesondere 5 bis 75 Gew.-%.

Das Verhältnis der Komponenten (A) : (B) an Gewichtsteilen in den wässrigen Emulsionen beträgt vorzugsweise 200 : 1 bis 5 : 1, insbesondere 100 : 1 bis 10 : 1.

Der Anteil des Emulgators (C) beträgt vorzugsweise 0,1 bis 30 Gew.-%, insbesondere 0,5 bis 10 Gew.-% der Gesamtmenge der Komponenten (A) und (B).

Die Emulsionen können zudem feste Siliconharze enthalten, die aus monofunktionellen $R_3SiO_{0,5}$-Einheiten und $SiO_2$ zusammengesetzt sind (sog. MQ-Harze), wobei das molare Verhältnis der $R_3SiO_{0,5}$- und $SiO_2$-Einheiten 0,4 bis 1,2 betragen kann. Bei R handelt es sich vorzugsweise um unsubstituierte Alkylreste, insbesondere den Methylrest. Diese MQ-Harze bewirken, daß insbesondere bei sehr stark saugenden Baustoffen eine rasche Ausbildung der Hydrophobie erfolgt.

Werden solche Siliconharze in den Emulsionen eingesetzt, so beträgt ihr Anteil vorzugsweise höchstens 10 Gew.-%, insbesondere höchstens 5 Gew.-%, bezogen auf die Gesamtmenge der Komponenten (A) und (B).

Des weiteren können die Emulsionen neben den Bestandteilen (A), (B) und (C) noch organische Polymere, wie z.B. fluorhaltige Polymere und Polyolefinwachse, enthalten. Anstelle der Polyolefinwachse können auch Siliconwachse eingesetzt werden.

Diese Polymere verleihen den erfindungsgemäßen Emulsionen besondere Eigenschaften. Mit fluorhaltigen Polymeren, wie z.B. fluorierten Acrylaten oder Polyurethanen, wirken die Emulsionen nicht nur wasserabweisend, sondern auch ölabweisend. Polyolefin- und Siliconwachse beeinflussen das Aussehen der mit den Emulsionen behandelten Baustoffoberflächen dahingehend, daß sie eine gewisse Farbvertiefung oder auch einen bestimmten Oberflächenglanz erzeugen.

Werden solche organischen Polymere oder Wachse in den Emulsionen eingesetzt, so beträgt ihr Anteil vorzugsweise höchstens 10 Gew.-%, insbesondere höchstens 5 Gew.-%, bezogen auf die Gesamtmenge der Komponenten (A) und (B).

Die Emulsionen können zusätzlich übliche Füllstoffe und Verdickungsmittel, insbesondere verstärkende Füllstoffe, also Füllstoffe mit einer BET-Oberfläche von mehr als 50 $m^2$/g, wie pyrogen hergestellte Kieselsäure, gefällte Kieselsäure und Silicium-Aluminium-Mischoxide großer BET-Oberfläche, enthalten. Besonders geeignet ist hochdisperse Kieselsäure. Es kann eine Art von Füllstoff, auch ein Gemisch von mindestens zwei Füllstoffen eingesetzt werden. Der Anteil an Füllstoffen beträgt vorzugsweise höchstens 5, insbesondere höchstens 2 Gew.-% der Gesamtmenge der Komponenten (A) und (B).

Die Emulsionen können auch noch Puffersubstanzen enthalten, die den pH-Wert im Bereich von 5 bis 9 stabilisieren, in dem die Alkyltrialkoxysilane sehr hydrolysebeständig sind. Geeignet sind alle organischen und anorganischen Säuren und Basen, die sich gegenüber den übrigen Bestandteilen der Emulsionen chemisch inert verhalten, insbesondere die Alkali-, Erdalkali- und Ammoniumsalze von Carbonsäuren, Phosphor-, Kohlen- und Schwefelsäure. Besonders bevorzugt sind Natriumcarbonat, Natriumhydrogencarbonat, Natriumhydrogenphosphat, und ein Gemisch aus Essigsäure und wässriger Ammoniaklösung. Die bevorzugte Menge an Puffersubstanzen beträgt vorzugsweise höchstens 3, insbesondere höchstens 1 Gew.-% der Gesamtmenge der Komponenten (A) und (B).

Die Emulsionen können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere höchstens 0,5 Gew.-% der Gesamtmenge der Komponenten (A) und (B).

Die erfindungsgemäßen wässrigen Emulsionen werden nach üblichen Verfahren zur Herstellung von wässrigen Emulsionen hergestellt. Vorzugsweise wird zunächst nur ein Teil des Wassers mit Emulgator (C) vermischt, danach die Komponente (B) zugesetzt und schließlich die Komponente (A) einemulgiert, bis eine viskose Ölphase ("steife Phase") entsteht und anschließend das restliche Wasser zur Bildung einer weniger viskosen Emulsion zuemulgiert. Die Komponenten (A) und (B) können auch vermischt und zu einer Emulsion aus Emulgator und Wasser gegeben werden. Das Mischen erfolgt vorzugsweise in Druckemulgiermaschinen, Kolloidmühlen oder insbesondere in einer schnellaufenden Stator-Rotor-Rührvorrichtung nach Prof. P. Willems.

Ebenfalls Gegenstand der Erfindung ist ein Verfahren zur Hydrophobierung von porösen mineralischen Baustoffen und Baubeschichtungen sowie von Holz, bei dem die Baustoffe, Baubeschichtungen und das Holz mit der vorstehenden wässrigen Emulsion behandelt werden. Die Behandlung umfaßt auch den Zusatz zu Massen, die zu Baustoffen und Baubeschichtungen verarbeitet werden.

Die Emulsionen eignen sich zur Hydrophobierung von mineralischen Baustoffen, wie Natur- oder Kunststein, Beton, Zement, Kalksandstein und Porenbeton, Baustoffen aus Tonmineralien, wie Ziegel, Holz sowie als Hydrophobierungs- und gegebenenfalls als Bindemittel wirkender Zusatz zu Gips, Verputzen und in Bautenbeschichtungen, wie Mineralfarben, Siliconharzemulsionsfarben und -putzen, Dispersionssilikatfarben, Dispersionsfarben, Streichfüller, Armierungsmassen und Grundierungen.

Die Emulsionen sind auch geeignet zur Hydrophobierung von feinteiligen anorganischen Stoffen, wie Perlit, Vermiculit und Wärmedämmstoffen.

Zur Hydrophobierung stark saugender mineralischer Baustoffe und Baubeschichtungen werden vorzugsweise Emulsionen eingesetzt, die sowohl Alkoxysilane (A1) als auch Organosiloxane (A2) aufweisen, vorzugsweise im Verhältnis Alkoxysilane (A1) : Organosiloxane (A2) von 0,5 : 1 bis 20 : 1, insbesondere 1 : 1 bis 10 : 1.

Die Emulsionen sind besonders geeignet zur Hydrophobierung von mineralisch gebundenen, vorzugsweise zementgebundenen Faserbaustoffen, deren Fasern aus Naturfasern oder Synthesefasern bestehen. Geeignete Naturfasern sind Mineralfasern, wie Steinwolle, Quarz- oder Keramikfasern oder Pflanzenfasern, wie Zellulose. Geeignete Synthesefasern sind beispielsweise Glasfasern, Kunststoffasern und Kohlefasern. Besonders bevorzugt ist die Verwendung der Emulsion zur Hydrophobierung von zementgebundenen Zellulosefaserbauteilen. Die Zellulosefasern können beispielsweise Jute-, Kokos- oder Hanffasern sein oder aus Papier, Karton oder Altpapier stammen.

Die Emulsionen eignen sich für die Anwendung in Masse, d.h. die Emulsion wird einer hydraulischen Mischung zur Herstellung von Bauteilen vor dem Abbinden zugesetzt oder für die Hydrophobierung von Bauteilen nach dem Abbinden.

Die erfindungsgemäßen Emulsionen können vor ihrer Verwendung als Hydrophobierungs- und gegebenenfalls Bindemittel mit Wasser verdünnt werden. Bei der Oberflächenimprägnierung von Baustoffen nach dem Abbinden ist eine Verdünnung bis zu einem Gesamtgehalt der Komponenten (A) und (B) von 1 Gew.-% günstig.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C. Der Festgehalt der Emulsionen bezeichnet die Summe aller Komponenten, mit Ausnahme von Wasser.

**Beispiele**

Als Komponente (A) werden eingesetzt:

H1:    iso-Octyltriethoxysilan

H2:    Organopolysiloxan der Summenformel $CH_3Si(OC_2H_5)_{0,8}O_{1,1}$ mit einem durchschnittlichen Molekulargewicht von etwa 650 g/Mol und einer Viskosität von etwa 20 $mm^2$/s

H3:    Als hochviskose Flüssigkeit vorliegendes Methylsiliconharz aus $CH_3SiO_{3/2}$-Einheiten, mit etwa 20 Mol-% $(CH_3)_2SiO_{2/2}$-Einheiten und etwa 10 Mol-% $C_2H_5OSiO_{3/2}$-Einheiten und einem Molekulargewicht von etwa 5000 g/Mol

H4:    Pulverförmig vorliegendes Methylsiliconharz aus $CH_3SiO_{3/2}$-Einheiten, mit etwa 3 Mol-% $(CH_3)_2SiO_{2/2}$-Einheiten und etwa 4 Mol-% $C_2H_5OSiO_{3/2}$-Einheiten, einem Molekulargewicht von etwa 5000 g/Mol und einem Erweichungspunkt von etwa 50°C

H5:    Organopolysiloxan der Summenformel $(CH_3)_{0,7}$(iso-Octyl)$_{0,3}Si(OCH_3)_{1,3}O_{0,85}$ mit einem durchschnittlichen Molekulargewicht von etwa 760 g/Mol und einer Viskosität von etwa 17 $mm^2$/s

Als Komponente (B) werden eingesetzt:

N1:    N(-2-Aminoethyl)-3-aminopropyltrimethoxysilan

N2:    Kondensationsprodukt aus H2 und N(-2-Aminoethyl)-3-aminopropyltrimethoxysilan in Gegenwart von KOH mit einer Aminzahl von etwa 3,0, einer Viskosität von etwa 500 $mm^2$/s bei 25°C und einem Restmethoxygehalt von weniger als 5 Mol-%, bezogen auf die anfangs im N(-2-Aminoethyl)-3-aminopropyltrimethoxysilan vorhandenen Methoxygruppen

Als Komponente (C) werden eingesetzt:

E1:    Arlypon® IT 16 von Chemische Fabrik Grünau GmbH, Illertissen, ein Isotridecylalkohol-(16)-polyglykolether

E2:    Polyviol® W 25/140 von Wacker-Chemie GmbH, München, ein Polyvinylalkohol mit einem Polymerisationsgrad von etwa 1600, der noch 11 - 14 % Acetoxyethyleneinheiten aufweist

Herstellung der Emulsionen

Die erfindungsgemäßen wässrigen Emulsionen werden dadurch hergestellt, daß zunächst ein Teil des Wassers mit Emulgiermittel (Komponente (C)) vermischt wid und aminofunktionelles Silan bzw. Siloxan (Komponente (B)), gefolgt von Silan und/oder Polysiloxan (Komponente (A)) emulgiert wird. Sowohl das zunächst erwähnte Vermischen als auch das Emulgieren erfolgen in einer schnellaufenden Rotor-Stator-Rührvorrichtung von Prof. P. Willems. Die Zusammensetzungen sind nachstehend in Tabelle I aufgeführt.
Die Vergleichsemulsionen werden auf analogem Wege hergestellt. Ihre Zusammensetzungen sind ebenfalls in Tabelle I aufgeführt.

Tabelle I

| Emulsion | Silan/ Siloxan Kompo- nente (A) | Aminosilan/ -siloxan Kom- ponente (B) | Emulgator (C) | Wasser |
|---|---|---|---|---|
| erfindungsgemäße Emulsionen | | | | |
| EM1 | 66,5%H1 | 2%N1 | 2,6%E1 | 29,7% |
| EM2 | 34,1%H1 12,3%H2 | 2%N1 | 1,8%E1 | 49,8% |
| EM3 | 43,4%H1 | 6,8%N2 | 1,8%E1 | 48,0% |
| EM4 | 40,0%H1 10,0%H5 | 0,5%N1 | 2,2%E1 | 47,7% |
| EM5 | 39%H1 5,8%H2 3,7%H4 | 2,7%N2 | 1,8%E1 | 47,0% |
| EM6 | 40,2%H1 6,9%H2 2,0%MQ-Harz * | 0,5%N1 | 2,2%E1 | 48,2% |
| EM7 | 9,2%H1 36,1%H3 | 4,9%N1 | 3,7%E2 | 46,1% |
| Vergleichsemulsionen | | | | |
| EM8 | 47,8%H1 | - | 2,2%E1 | 50,0% |
| EM9 | 36,1%H1 12,3%H2 | - | 1,8%E1 | 49,8% |
| EM10 | 39,2%H1 8,8%H2 0,9%Füllstoff** | - | 2,2%E1 | 48,9% |
| EM11 | 63,5%H1 | 5,0% Aminosiloxan*** | 2,6%E1 | 28,9% |

\* MQ-Harz: Feststoff, bestehend aus $Me_3SiO_{0,5}$- und $SiO_2$-Einheiten im Verhältnis 1:1
\*\* Hochdispere Kieselsäure mit einer spezifischen Oberfläche von ca. $150m^2/g$
\*\*\* Kondensationsprodukt von $\alpha,\omega$-Dihydroxypolydimethylsiloxan und N-(2-Aminoethyl)-3-aminopropyltrimethoxysilan einer Viskosität von c. 1500 $mm^2/s$ (bei 25°C) und einer Aminzahl von ca. 0,6

Alle Emulsionen zeigen weder nach 14 Tagen Lagerung bei 50°C noch nach 6 Monaten bei Raumtemperatur eine Phasentrennung. Sie sind also lagerstabil. Dasselbe gilt für daraus hergestellte Verdünnungen mit Wirkstoffgehalten von 25 bis 5 %. Bei noch niedrigeren Konzentrationen, also z.B. 1% Wirkstoffgehalt, kann es zu leichtem Aufrahmen kommen, eine richtige Phasentrennung tritt nicht auf.

**Beispiel 1**

**Hydrophobierung von mineralischen Beschichtungen**

Erfindungsgemäße und nicht erfindungsgemäße Emulsionen werden mit Wasser auf 10 % Wirkstoffgehalt verdünnt und anschließend mit einem Pinsel auf mit Mineralfarbe (Silikatfarbe Purkristallat® von Keim-Farben GmbH, Diedorf) beschichteten Kalksandstein aufgetragen (Auftragsmenge ca. 450 $g/m^2$). Nach 14-tägigem Lagern bei Raumtemperatur werden die Verfärbung der beschichteten und hydrophobierten Kalksandsteine sowie der Abperleffekt von aufgetropftem Wasser durch Messen des Kontaktwinkels beurteilt. Kontaktwinkel von > 90° bezeichnen gute Hydrophobie, solche < 90° deuten auf Benetzung hin und stehen damit für eher schlechte Hydrophobie. Die Ergebnisse sind in der nachstehenden Tabelle II zusammengestellt.

Tabelle II

| Emulsion | Verfärbung | Abperleffekt | Kontaktwinkel |
|---|---|---|---|
| EM 1 | keine | gut | 110° |
| EM 2 | keine | sehr gut | 130° |
| EM 3 | sehr leicht | sehr gut | 125° |
| EM 4 | keine | sehr gut | 140° |
| EM 5 | leicht | sehr gut | 140° |
| EM 6 | leicht | sehr gut | 140° |
| EM 8 | keine | schlecht | 30° |
| EM 9 | keine | mäßig | 70° |
| EM 10 | weiße Flecken | sehr gut | 135° |
| EM 11 | stark | sehr gut | 130° |

Wie aus Tabelle II hervorgeht, verfärben die erfindungsgemäßen Emulsionen den Untergrund nicht und erzeugen eine hervorragende Hydrophobie. Geringe Verfärbung des Substrates ist bei diesem Test gleichzusetzen mit gutem Penetrationsverhalten der betreffenden Produkte. Die Vergleichsemulsionen EM 8 bis EM 10 penetrieren gut, bei EM 10 zeigen sich auf dunkler Silikatfarbe allerdings weiße Flecken. Aufgrund fehlender Aminkomponente ist der Abperleffekt der Vergleichsemulsionen EM 8 und EM 9 deutlich schlechter als der der erfindungsgemäßen Emulsionen. Bei EM 11 bewirkt das Aminosiloxan zwar einen guten Abperl effekt, führt aber auch zu einer drastischen Verdunkelung des beschichteten Kalksandsteins.

**Beispiel 2**

**Hydrophobierung von unbeschichtetem Kalksandstein**

Erfindungsgemäße und nicht erfindungsgemäße Emulsionen werden mit Wasser auf die in Tabelle III angegebenen Wirkstoffgehalte verdünnt. In diese werden dann Kalksandsteinplatten (ca. 10 x 10 x 2,5 cm$^3$) 5 Minuten lang eingetaucht (ca. 5 cm Flüssigkeitsüberstand). Nach 14 Tagen Lagerung bei Raumtemperatur werden die so behandelten Probekörper sowie nicht behandelte Referenzprüfkörper in Wasser gelegt (5 cm Wasserüberstand) und ihre Wasseraufnahme als relative Gewichtszunahme nach 24 Stunden bestimmt. Anschließend werden die Prüfkörper getrocknet und gebrochen, und die Dicke der hydrophoben Zone (ist gleich der Eindringtiefe der hydrophobierenden Wirkstoffe) wird durch Auftropfen von Wasser auf die Bruchfläche bestimmt. Der Abperleffekt wird, wie in Beispiel 1, durch Messen des Kontaktwinkels charakterisiert. Die Ergebnisse dieser Versuche sind in Tabelle III zusammengefaßt.

Tabelle III

| Emulsion | Wirkstoffgehalt | Wasseraufnahme | Eindringtiefe | Abperleffekt | Kontaktwinkel |
|---|---|---|---|---|---|
| EM 1 | 5% | 2,5% | 1,5 - 2,5 mm | gut | 110° |
| | 10% | 1,2% | 2 - 4 mm | gut | 105° |
| EM 2 | 5% | 1,4% | 1 - 2 mm | gut | 115° |
| | 10% | 0,6% | 1,5 - 3 mm | sehr gut | 125° |
| EM 4 | 5% | 1,1% | 1 - 2 mm | sehr gut | 130° |
| | 10% | 0,5% | 2 - 3 mm | sehr gut | 130° |
| EM 6 | 5% | 1,3% | 1 - 2 mm | sehr gut | 135° |
| | 10% | 0,7% | 2,5 - 3 mm | sehr gut | 140° |

Tabelle III (fortgesetzt)

| Emulsion | Wirkstoffgehalt | Wasseraufnahme | Eindringtiefe | Abperleffekt | Kontaktwinkel |
|---|---|---|---|---|---|
| EM 8 | 5% | 7,5% | 1 - 3 mm | schlecht | 30° |
|  | 10% | 4,1% | 2 - 4 mm | schlecht | 25° |
| EM 9 | 5% | 6,7% | 1 - 2 mm | schlecht | 60° |
|  | 10% | 3,5% | 2 - 3 mm | mäßig | 50° |
| EM 10 | 5% | 5,2% | 0,5 - 1,5 mm | gut | 120° |
|  | 10% | 3,4% | 1,5 - 3 mm | sehr gut | 140° |
| EM 11 | 5% | 2,7% | 0 - 0,5 mm | gut | 115° |
|  | 10% | 0,9% | 0,5 - 1 mm | sehr gut | 130° |
| unbehandelt | - | 12,3% | - | - | - |

Aus Tabelle III geht hervor, daß die erfindungsgemäßen Emulsionen einen signifikant besseren Abperleffekt ergeben als die Vergleichsemulsionen EM 8 und EM 9. Die aminofunktionelle Komponente hat also selbst in sehr niedriger Konzentration, wie z. B. in EM 4, einen deutlichen Einfluß auf die Anhaftung der Siliconharze an die Oberfläche bzw. den oberflächennahen Bereich des Substrates.

In ähnlicher Weise wird die Wasseraufnahme der mit den erfindungsgemäßen Emulsionen behandelten Kalksandsteine positiv beeinflußt, d.h. reduziert. Bei den nicht erfindungsgemäßen Vergleichsemulsionen EM 8 bis EM 10 ist die Wasseraufnahme auch nach zwei Wochen nach der Applikation hoch. Bei EM 11 sind Abperleffekt und Wasseraufnahme vergleichbar mit den erfindungsgemäßen Emulsionen, die Eindringtiefe ist jedoch gering. Eine geringe Eindringtiefe ist unerwünscht, da sie die Langzeitbeständigkeit einer einer Bewitterung ausgesetzten Hydrophobierung herabsetzt. EM 10 liefert einen ähnlich guten Abperleffekt wie die erfindunsgemäßen Emulsionen, der anfangs hohe Kontaktwinkel von aufgetropftem Wasser fällt jedoch rasch ab bis hin zur Benetzung. Bei der Wasseraufnahmeprüfung zeigt sich dieser Effekt darin, daß die hellen Kalksandsteine schon nach kurzer Zeit im Wasser dunkel und nass aussehen. Dieser unerwünschte Effekt tritt bei den erfindungsgemäßen Emulsionen nicht auf, die Steine sind auch nach 24 Stunden Wasserlagerung noch unverändert in ihrem Aussehen.

**Beispiel 3**

**Hydrophobierung von Tonziegeln**

Erfindungsgemäße und nicht erfindungsgemäße Emulsionen werden mit Wasser auf 10 % Wirkstoffgehalt verdünnt. In diese werden dann Tonziegel (ca. 22 x 10 x 7 $cm^3$) 1 Minute lang eingetaucht (ca. 5 cm Flüssigkeitsüberstand). Nach 14 Tagen Trocknungszeit werden analog zu Beispiel 2 Wasseraufnahme, Abperleffekt bzw. Kontaktwinkel und Eindringtiefe bestimmt. Die Ergebnisse dieser Untersuchungen sind in Tabelle IV zusammengefaßt.

Tabelle IV

| Emulsion | Wasseraufnahme | Eindringtiefe | Abperleffekt | Kontaktwinkel |
|---|---|---|---|---|
| EM 1 | 1,4% | 15 - 20 mm | mäßig | 75° |
| EM 2 | 0,8% | 12 - 17 mm | gut | 110° |
| EM 4 | 0,3% | 10 - 15 mm | sehr gut | 125° |
| EM 8 | 4,8% | 14 - 20 mm | keiner | 10° |
| EM 9 | 3,5% | 11 - 14 mm | schlecht | 30° |
| EM 11 | 0,5% | 8 - 12 mm | gut | 110° |
| unbehandelt | 17,6% | - | - | - |

Auf den hoch saugfähigen Tonziegeln liefern nur solche erfindungsgemäße Emulsionen eine sehr gute Hydrophobie, die neben Silan auch eine Siloxankomponente enthalten, also z.B. EM 2 und EM 4, die rein silanhaltige EM 1 dagegen nicht. Ein Vergleich von EM 1, EM 2 und EM 4 mit EM 8 und EM 9 zeigt aber, wie die Aminokomponente sowohl den Abperleffekt wie auch die Wasseraufnahme positiv beeinflußt. Besonders gut schneidet EM 4 ab, das neben Ethoxysilan auch methoxyfunktionelles Siloxan enthält, welches wesentlich rascher reagiert als vergleichbare ethoxyfunktionelle Komponenten. EM 11 ergibt aufgrund seines Aminosiloxangehalts ebenfalls gute Resultate, dringt aber etwas schlechter ein als die anderen Emulsionen und verdunkelt die Steinoberfläche.

**Beispiel 4**

**Hydrophobierung von Beton**

Die Beurteilung der Qualität von Hydrophobiermitteln für die Betonimprägnierung erfolgt nach den Technischen Prüfvorschriften für Oberflächenschutzsysteme der ZTV-SIB 90 des Bundesministeriums für Verkehr, Bonn. Die Prüfung der Wasseraufnahme und Beständigkeit in alkalischer Umgebung erfolgt mit Mörtelscheiben, die nach DIN EN 196 T1 hergestellt werden (Wasser/Zement Faktor 0,5). Die Scheiben haben einen Durchmesser von 10 cm und eine Höhe von 2 cm. Vor der Prüfung müssen die Prüfkörper mindestens 90 Tage im Normklima (DIN 50 014, 23 °C / 50 % relative Luftfeuchtigkeit) gelagert worden sein. Die Prüfung erfolgt nach folgendem Schema:

Herstellung von 10 Mörtelscheiben
Alter der Mörtelscheiben min. 90 d; vor Beginn der Prüfung Lagerung im Normalklima DIN 50014 23/50-2 (Normklimagewicht I)
Abbürsten mit Wurzelbürste, 28 d Lagerung in demineralisiertem Wasser, Bestimmung der Wasseraufnahme (WA)
Auswahl von 5 Mörtelscheiben, die dem Mittelwert der WA der 10 Mörtelscheiben am nächsten kommen.
Lagerung im Trockenschrank bei 75°C bis zum Erreichen des Normklimagewichts I
3 d Lagerung im Normklima DIN 50014-23/50-2
2 min. Lagerung im Wasser
24 h Lagerung bei 23/95, 2 h Lagerung im Normklima DIN 50014-23/50-2
Hydrophobierung durch 1 min. Tauchen Bestimmung der Imprägniermittelaufnahme
14 d Lagerung im Normklima DIN 50014-23/50-2
48 h Lagerung in 0,1 m KOH-Lösung, Bestimmung der aufgenommenen Flüssigkeitsmenge
Lagerung im Trockenschrank bei 75°C bis zum Erreichen des Normklimagewichts I
3 d Lagerung im Normklima DIN 50014-23/50-2
Bestimmung der Wasseraufnahme (2 d, 28 d)
24 h Trocknung bei 75°C
Bestimmung der Eindringtiefe

Ein Hydrophobiermittel wird als geeignet für Betonhydrophobierung eingestuft, wenn die Wasseraufnahme bei der 28-tägigen Wasserlagerung um mindestens 50 % reduziert wird.
Des weiteren wurde die Wirkung der erfindungsgemäßen Emulsionen hinsichtlich Erhöhung des Frost-Tausalz-Widerstandes gemäß den Technischen Prüfvorschriften für Oberflächenschutzsysteme der ZTV-SIB 90 untersucht. Hierfür wurden als Prüfkörper Betonwürfel (10 cm Kantenlänge) der Festigkeitsklasse B 25 nach DIN 1045 (Wasser/Zement Faktor 0,6) hergestellt. Vor der Prüfung wurden die Prüfkörper mindestens 90 Tage im Normklima (DIN 50 014, 23 °C / 50 % relative Luftfeuchtigkeit) gelagert. Die Würfel werden durch vollständiges Eintauchen in die Hydrophobieremulsion für die Dauer von einer Minute getränkt. Anschließend werden die Probekörper 14 d im Normklima (DIN 50 014, 23 °C / 50 % rel. Luftfeuchtigkeit) gelagert. Danach werden die Betonwürfel für 24 Stunden in 3 %ige NaCl-Lösung getaucht und anschließend den Frost-Tau-Zyklen unterworfen (1 Zyklus beinhaltet 16 Stunden Lagerung bei -15 °C und 8 Stunden Auftauen auf + 20 °C). Nach jeweils 5 Zyklen wird die Masse der Probekörper bestimmt und der relative Masseverlust wird errechnet. Ein Hydrophobiermittel erfüllt die Anforderungen, wenn die damit imprägnierten Betonwürfel mindestens 15 Zyklen mehr schadensfrei überstehen als unbehandelte Referenzprüfkörper.
Alle für die Versuche herangezogenen Emulsionen wurden auf 20 % Wirkstoffgehalt verdünnt.
Die Ergebnisse der Prüfung der Wasseraufnahme und Beständigkeit in alkalischer Umgebung sind in Tabelle V zusammengefaßt, die der Frost-Tausalz-Beständigkeit in Tabelle VI.

Tabelle V

| Emulsion | Imprägniermittelaufnahme | Wasseraufnahme | Eindringtiefe |
|---|---|---|---|
| EM 1 | 129 g/m$^2$ | 2,3% | 2 - 4 mm |

# EP 0 908 498 A2

Tabelle V (fortgesetzt)

| Emulsion | Imprägniermittelauf-nahme | Wasseraufnahme | Eindringtiefe |
|---|---|---|---|
| EM 2 | 121 g/m$^2$ | 2,7% | 1,5 - 3 mm |
| EM 11 | 103 g/m$^2$ | 3,9% | 0,5 - 2 mm |
| unbehandelt | - | 5,7% | - |

Tabelle VI

| Emulsion | Imprägniermittelaufnahme | relative Massenänderung | | | | |
|---|---|---|---|---|---|---|
| | | Vorlagerung | 1 Zyklus | 5 Zyklen | 10 Zyklen | 15 Zyklen |
| EM 1 | 175 g/m$^2$ | + 0,5 % | + 2,0 % | + 4,2 % | + 4,5 % | + 2,1 % |
| EM 2 | 161 g/m$^2$ | + 1,2 % | + 3,1 % | + 4,4 % | + 2,7 % | + 0,5 % |
| EM 11 | 148 g/m$^2$ | + 1,6 % | + 2,2 % | + 3,5 % | + 0,9 % | - 4,7 % |
| unbehandelt | - | + 2,7 % | + 3,4 % | - 1,1 % | - 4,5 % | - 17,5% |

Wie aus den Tabellen V und VI hervorgeht, dringen die erfindungsgemäßen Emulsionen EM1 und EM 2 hervorragend in den Beton ein, was Voraussetzung für das Bestehen der Kriterien Wasseraufnahme (kleiner 50 %, bezogen auf unbehandelt) und Frost-Tau-Beständigkeit (mindestens 15 Zyklen schadensfrei) ist. Bei der Vergleichsemulsion EM 11 stört das aminofunktionelle Polydimethylsiloxan die Penetration so sehr, daß die Kriterien hinsichtlich Wasseraufnahme und Frost-Tausalz-Beständigkeit nicht erfüllt werden.

**Beispiel 5**

**Hydrophobierung von Holz**

Fichtenholzbretter (15 x 7,5 x 0,5 cm$^3$) werden drei Minuten in die Hydrophobieremulsionen getaucht. Anschließend werden die Probekörper 14 Tage bei Raumtemperatur getrocknet, und dann wird die kapillare Wasseraufnahme in einem sogenannten Floatingtest bestimmt. Dazu werden die Bretter mit beiden flachen Seiten je 15 Minuten schwimmend in Wasser gelegt, und die Gewichtszunahme wird festgehalten. Anschließend werden die Probekörper in einem Schnellbewitterungsgerät (Model QUV/se from Q-Panel Lab Products, Cleveland, OH 44145, USA) 2000 Stunden bewittert. Der Bewitterungszyklus wird so eingestellt, daß 8 Stunden mit UV(B)-Strahlung bestrahlt, dann 10 Minuten besprüht und anschließend 4 h in feuchtegesättigter Luft bei einer Temperatur von 50 °C kondensiert wird. Dann wird wieder 10 Minuten besprüht und der nächste Zyklus wird mit Bestrahlen begonnen.
Nach der Bewitterung werden die Probekörper eine Woche bei Raumtemperatur getrocknet und erneut dem oben beschriebenen Floatingtest unterworfen. Zudem wird der Abperleffekt des Holzes qualitativ beurteilt. Die Ergebnisse sind in Tabelle VII zusammengefaßt.

Tabelle VII

| Emulsion | Wirkstoffgehalt | vor Bewitterung | | nach Bewitterung | |
|---|---|---|---|---|---|
| | | Wasseraufnahme | Abperleffekt | Wasseraufnahme | Abperleffekt |
| EM 4 | 5% | 11% | mäßig | 6% | gut |
| | 10% | 8% | mäßig | 4% | gut |
| EM 4 + Wachs* | 5% | 7% | sehr gut | 3% | sehr gut |
| | 10% | 4,5% | sehr gut | 1,5% | sehr gut |
| EM 7 | 5% | 4% | sehr gut | 2,5% | sehr gut |
| | 10% | 2% | sehr gut | 1,5% | sehr gut |
| EM 8 | 5% | 17% | schlecht | 14% | mittel |
| | 10% | 13% | schlecht | 9,5% | mäßig |
| unbeh. | - | 21% | keiner | 27% | keiner |

* 9 Gewichtsteile der Emulsion EM 4 wurden mit 1 Gewichtsteil einer 35%igen Emulsion eines Siliconwachses zusammengemischt. Der Wirkstoffgehalt des Wachses ist beim Gesamtwirkstoffgehalt in Spalte 2 von Tabelle VII berücksichtigt.

Von den Ergebnissen in Tabelle VII kann geschlossen werden, daß auf Holz insbesondere die Emulsionen EM 4 und EM 7 gute Ergebnisse liefern, während die Vergleichsemulsion EM 8 eher mäßig abschneidet. Der Grund dafür ist, daß auf dem weitgehend neutralen Substrat Holz eine nur aus Silan bestehende Emulsion EM 8 extrem langsam zum eigentlichen Wirkstoff, dem Siliconharz, reagiert. Ein nicht unerheblicher Teil des - in aller Regel flüchtigen - Silans wird folglich verdampfen, was sich in einer schlechten Reduktion der Wasseraufnahme widerspiegelt. EM 7 besteht überwiegend aus dem wenig reaktiven Harz H3, das an der Oberfläche des Holzes rasch eine gute Hydrophobie ausbildet. Bei EM 4 bewirkt die Siloxan-Komponente eine gute Frühwasserbeständigkeit, die sich allerdings durch ein geeignetes Siliconwachs (EM 4 + Wachs) noch erheblich verbessern läßt. Im Gegensatz zu herkömmlichen organischen Polymerwachsen ist das verwendete Siliconwachs witterungsresistent und langlebig.

**Beispiel 6**

**Hydrophobierende Grundierungsmittel für mineralische Beschichtungen auf mineralischen Baustoffen**

a) Auf 10 Gew. -% Festgehalt verdünnte Emulsion EM 2 wird auf Kalksandstein mit 400 g/m$^2$ aufgetragen. Nach 14-tägigem Lagern bei Raumtemperatur werden nachstehende Eigenschaften des hydrophobierten Kalksandsteins gemessen:

Abperleffekt:      sehr gut
Kontaktwinkel:    130°
Eindringtiefe:      3 mm
w-Wert:              0,073 kg/m$^2$s$^{1/2}$
sd-Wert:            0,02 m

Die Wasseraufnahme wird durch Messen des Wasseraufnahmekoeffizienten w nach DIN 52617 beurteilt. Werte w < 0,1 kg/m$^2$s$^{1/2}$ bezeichnen eine äußerst geringe Wasseraufnahme.
Der sd-Wert wird nach DIN 52615 gemessen; sd-Werte < 0,1 m weisen auf hohe Wasserdampfdurchlässigkeit hin, sd-Werte > 0,1 m auf verringerte Wasserdampfdurchlässigkeiten.
Der 14 Tage gelagerte Kalksandstein wird mit Siliconharzemulsionsfarbe nach DIN 18363 (der Gehalt an organischen Harzen übersteigt nicht den Gehalt an Organopolysiloxanen) bestrichen. Dann wird die Haftzugfestigkeit der Beschichtung nach ISO 4624 bestimmt zu 2,8 N/mm$^2$. Ohne die hydrophobierende Grundierung mit Emulsion EM 2,10 %ig wird die Haftung dieser Siliconharzfarbe auf Kalksandstein nur mit 1,5 N/mm$^2$ ermittelt.
b) Auf 10 Gew. -% Festgehalt verdünnte Emulsion EM 3 wird 14 Tage bei 50°C gelagert und zeigt danach keine optische Veränderung. Anschließend wird diese verdünnte Emulsion durch Pinselauftrag auf eine 2 mm dick mit mürbem Kalkzementputz beschichtete Faserzementplatte aufgetragen und danach 14 Tage bei Raumtemperatur gelagert. Beim unbehandelten Kalkzementputz wird ein w-Wert von 1,3 kg/m$^2$s$^{1/2}$ gefunden.

Folgende Eigenschaften des so hydrophobierten Kalkzementputzes werden gefunden:

| | |
|---|---|
| Abperleffekt: | sehr gut |
| Kontaktwinkel: | 125° |
| Eindringtiefe: | 2 mm |
| w-Wert: | 0,068 kg/m$^2$s$^{1/2}$ |

Auffallend ist die verbesserte Oberflächenfestigkeit des Kalkzementputzes nach der Applikation von 10%iger EM 3.

Der so behandelte Untergrund kann mit Siliconharzemulsionsharzfarben beschichtet werden. Alle so beschichteten Präparate zeigen nach Q-UV-Schnellbewitterung von 1000 h keinerlei Abplatzungen oder farbliche Veränderungen bei Erhalt des sehr guten Abperleffekts.

**Beispiel 7**

**Hydrophobierungsadditiv für wässrige, hochgefüllte Fassadenanstrichmittel und Putze**

Betrachtet werden hier hochgefüllte, eher bindemittelarme Fassadenanstrichmittel mit hoher kapillarer Wasseraufnahme, wie Dispersionssilikatfarben und -putze, hochgefüllte Beschichtungen auf Dispersionsbasis, Dispersionskalkfarben, Streichfüller und Armierungsmassen, Mineralfarben, Mineralputze, Kalkfarben u.ä. Die Pigmentvolumen-Konzentration (PVK) der Beschichtungen liegt typischerweise bei über 50%. Überlicherweise liegt die Wasseraufnahme der vorgenannten Beschichtungsmittel bei mindestens 3 kg/m$^2$ nach 24 Std., bestimmt nach dem nachstehend beschriebenen Kurztest.

Der Zusatz von nur 1% der unverdünnten erfindungsgemäßen Emulsionen als Hydrophobierugsadditiv zu den nachstehend in Tabelle VIII aufgeführten Beschichtungsmitteln senkt diese kapillare Wasseraufnahme drastisch. Die Wasseraufnahme wird bestimmt nach dem nachstehend beschriebenen Kurztest.

Die Saugwirkung von Kalksandstein beziehungsweise die des Verbundsystems Kalksandstein/Beschichtung wird gemessen. Die Messung der kapillaren Wasseraufnahme ist in der DIN 52617 beschrieben. Das hier angewendete Verfahren wird als Kurztest in Anlehnung an obige Vorschrift ausgeführt. Als Anstrichträger dienen Kalksandstein-Scheiben (115 x 70 x 20 mm mit einer Oberfläche von 0,008 m$^2$). Bei der Beschichtung der Anstrichträger werden als erster Anstrich 6,5 g auf die Oberfläche gegossen und mit einem Flachpinsel gleichmäßig verteilt, wobei die Seitenflächen ebenfalls beschichtet wenden. Im Abstand von 24 Stunden erfolgt der zweite Anstrich. Die aufgetragene Menge Farbe beträgt 4,5 g. Die beschichteten Probekörper werden 24 Stunden bei Raumtemperatur und anschließend 24 Stunden bei 50°C gelagert. Zur weiteren Konditionierung erfolgt eine zusätzliche 24-stündige Lagerung bei Raumtemperatur.

Die so vorbereiteten Probekörper werden in Schalen, die mit Schaumstoff ausgelegt und mit Wasser gefüllt sind, so eingebracht, daß die gestrichene Oberfläche ständig mit der mit Wasser gesättigten Schaumstoffoberfläche in Kontakt bleibt. Die Gewichtszunahme wird - in Abhängigkeit von der Zeit (nach 2,6 und 24 Stunden) - gemessen und mit derjenigen des unbehandelten Probekörpers verglichen.

Tabelle VIII

| Beschichtungsmittel | Wasseraufnahme [kg/m$^2$] | Zusatz je 1 Gew. -% |
|---|---|---|
| Dispersionssilikatfarbe | 6,4 | - |
| | 0,28 | EM3 |
| Sumpfkalkputz | 7,4 | - |
| | 0,35 | EM4 |
| Dispersionsfüllfarbe (PVK 70) | 3,4 | - |
| | 0,62 | EM2 |

**Beispiel 8**

**Hydrophobierungsadditiv für Mörtelmischungen**

Eine Mischung von 1350 g Sand und 450 g Portlandzement wird mit einem Gemisch aus 225 g Wasser und 5,2 g Emulsion (ein Versuch mit EM 1, ein zweiter Versuch mit EM 11) zu einem Mörtel verrührt. Dieser wird dann in Ringe aus Polytetrafluorethylen von 10 cm Durchmesser und 2 cm Höhe eingebracht. Nach 4 Wochen Trocknungszeit werden die Proben entschalt und für 28 Tage 5 cm tief in Wasser gelegt, und die Wasseraufnahme wird gravimetrisch bestimmt.

Zusätzlich werden die Mörtelmischungen in rechteckige Formen aus Polytetrafluorethylen mit den Maßen 15 cm (Länge) x 4 cm (Breite) x 4 cm (Höhe) eingegossen. Nach ebenfalls 4 Wochen Härtungszeit werden die Probekörper entschalt und zur Betimmung von Druck- und Biegezugfestigkeit verwendet.

Die Ergebnisse der Wasseraufnahme sowie Druck- und Biegezugfestigkeit sind in nachfolgender Tabelle IX zusammengefaßt.

Tabelle IX

| Emulsion | Wasseraufnahme | Druckfestigkeit | Biegezugfestigkeit |
|---|---|---|---|
| EM 1 | 2,2% | 41 N/mm$^2$ | 7,8 N/mm$^2$ |
| EM 11 | 2,4% | 28 N/mm$^2$ | 6,0 N/mm$^2$ |
| unbehandelt | 5,5% | 43 N/mm$^2$ | 7,6 N/mm$^2$ |

Aus Tabelle IX geht hervor, daß sowohl die erfindungsgemäße Emulsion EM 1 als auch die Vergleichsemulsion EM 11 die Wasseraufnahme der Mörtelproben signifikant erniedrigen. Im Gegensatz zu EM 1 beeinträchtigt EM 11 aber aufgrund seines Polydimethylsiloxananteils die mechanischen Eigenschaften Druck- und Biegezugfestigkeit in erheblichem Maße, während sie durch den Zusatz von EM 1 nahezu unverändert bleiben.

**Patentansprüche**

1.  Wässrige Emulsion, welche die Komponenten

    (A), welche ausgewählt werden aus
    (A1) $C_1$-$C_{20}$-Kohlenwasserstoff-$C_1$-$C_6$-alkoxysilanen und
    (A2) $C_1$-$C_6$-Alkoxygruppen enthaltenden, verzweigten Organopolysiloxanen,
    (B), welche ausgewählt werden aus
    (B1) Aminoalkygruppen enthaltenden $C_1$-$C_6$-Alkoxysilanen und
    (B2) Aminoalkygruppen enthaltenden, verzweigten Organosiloxanen, und
    (C) Emulgator enthält.

2.  Wässrige Emulsion nach Anspruch 1, wobei die $C_1$-$C_{20}$-Kohlenwasserstoff-$C_1$-$C_6$-alkoxysilane (A1) 1 oder 2 gleiche oder verschiedene, gegebenenfalls halogensubstituierte, über SiC-gebundene einwertige $C_1$-$C_{20}$-Kohlenwasserstoffreste besitzen und die übrigen Reste gleiche oder verschiedene $C_1$-$C_6$-Alkoxyreste sind.

3.  Wässrige Emulsion nach Anspruch 1 oder 2, wobei die Organopolysiloxane (A2) aus Einheiten der allgemeinen Formel (I)

$$R_x Si(OR^1)_y(OH)_z O_{\frac{4-x-y-z}{2}} \qquad (I),$$

aufgebaut sind, in der

    **R**      gleiche oder verschiedene einwertige, gegebenenfalls halogensubstituierte, über SiC-gebundene $C_1$-$C_{20}$-Kohlenwasserstoffreste,
    **R$^1$**      gleiche oder verschiedene einwertige $C_1$-$C_6$-Alkylreste,
    **x**      die Werte 0, 1, 2 oder 3, durchschnittlich 0,8 bis 1,8,
    **y**      die Werte 0, 1, 2, oder 3, durchschnittlich 0,01 bis 2,0 und
    **z**      die Werte 0, 1, 2 oder 3, durchschnittlich 0,0 bis 0,5 bedeuten, mit der Maßgabe, daß die Summe von **x, y** und **z** durchschnittlich höchstens 3,5 beträgt, wobei

die Organopolysiloxane (A2) mindestens eine Einheit der allgemeinen Formel (I) aufweisen, in der die Summe von **x**, **y** und **z** die Werte 0 oder 1 beträgt.

4. Wässrige Emulsion nach Anspruch 1 bis 3, wobei die Aminoalkygruppen enthaltenden $C_1$-$C_6$-Alkoxysilane (B1) die allgemeine Formel (II)

$$R^2{}_a R^3{}_b Si(OR^4)_{4-a-b} \tag{II},$$

aufweisen, in der

**R²** gleiche oder verschiedene einwertige, gegebenenfalls halogensubstituierte, SiC-gebundene $C_1$-$C_{20}$-Kohlenwasserstoffreste bedeutet,

**R³** gleiche oder verschiedene einwertige, gegebenenfalls halogensubstituierte, SiC-gebundene Aminoalkylreste mit 1 bis 30 Kohlenstoffatomen bedeutet,

**R⁴** gleich oder verschieden sein kann und Wasserstoffatom oder $C_1$-$C_6$-Alkylreste bedeutet,

**a** 0, 1, oder 2 und

**b** 1, 2 oder 3 ist,

mit der Maßgabe, daß die Summe aus **a** und **b** kleiner oder gleich 3 ist.

5. Wässrige Emulsion nach Anspruch 1 bis 4, wobei die Aminoalkygruppen enthaltenden, verzweigten Organosiloxane (B2) aus Einheiten der allgemeinen Formel (IV)

$$R^7{}_c R^8{}_d (OR^9)_e SiO_{\frac{4-c-d-e}{2}} \tag{IV},$$

aufgebaut sind, in der

**R⁷** die Bedeutungen von **R**,

**R⁸** die Bedeutungen von **R³** und

**R⁹** die Bedeutungen von **R¹** aufweisen und

**c** die Werte 0 oder 1,

**d** die Werte 0, 1, 2, oder 3 und

**e** die Werte 0, 1, 2 oder 3 bedeuten, mit der Maßgabe, daß die Summe von **c**, **d** und **e** höchstens 3 beträgt und die Organopolysiloxane (B2) mindestens eine Einheit der allgemeinen Formel (IV) aufweisen, in der die Summe von **c**, **d** und **e** die Werte 0 oder 1 beträgt.

6. Wässrige Emulsion nach Anspruch 4 und 5, wobei Rest **R³** einen Rest der allgemeinen Formel (III)

$$R^5{}_2 NR^6\text{-} \tag{III},$$

bedeutet, worin

**R⁵** gleich oder verschieden sein kann und Wasserstoff oder einwertigen, gegebenenfalls substituierten $C_1$-$C_{10}$-Kohlenwasserstoffrest oder $C_1$-$C_{10}$-Aminokohlenwasserstoffrest und

**R⁶** einen zweiwertigen $C_1$-$C_{15}$-Kohlenwasserstoffrest bedeuten.

7. Wässrige Emulsion nach Anspruch 1 bis 6, wobei die Gesamtmenge der Komponenten (A) und (B) 1 bis 80 Gew.-% beträgt.

8. Verfahren zur Hydrophobierung von porösen mineralischen Baustoffen und Baubeschichtungen sowie von Holz, bei dem die Baustoffe, Baubeschichtungen und das Holz mit der Emulsion gemäß Anspruch 1 bis 7 behandelt werden.